# EUROPÄISCHE PATENTSCHRIFT

(11) **EP 4 160 479 B1**
(45) Veröffentlichungstag und Bekanntmachung des Hinweises auf die Patenterteilung: **27.11.2024**
(21) Anmeldenummer: 22199159.9
(22) Anmeldetag: 30.09.2022
(51) Int. Cl.: G06K 19/073

(54) **WERT- ODER SICHERHEITSDOKUMENT UND VERFAHREN ZUM BETREIBEN EINES WERT- ODER SICHERHEITSDOKUMENTS**
VALUE OR SECURITY DOCUMENT AND METHOD FOR OPERATING A VALUE OR SECURITY DOCUMENT
DOCUMENT DE VALEUR OU DE SÉCURITÉ ET PROCÉDÉ DE FONCTIONNEMENT D'UN DOCUMENT DE VALEUR OU DE SÉCURITÉ

(30) Priorität: 04.10.2021 DE 102021125698
(43) Veröffentlichungstag der Anmeldung: 05.04.2023
(73) Patentinhaber: Bundesdruckerei GmbH, 10969 Berlin (DE)
(72) Erfinder: Mauderer, Dr. Michael, 81825 München (DE); Schultheiß, Christoph, 85622 Feldkirchen (DE); Bielesch, Dr. Ulrich, 56132 Frücht (DE); Rötzer, Martin, 85229 Markt Indersdorf (DE)
(74) Vertreter: Hentrich Patent- & Rechtsanwaltspartnerschaft mbB

(56) Entgegenhaltungen:
- US-A1- 2017 098 106
- US-A1- 2017 213 120

## Beschreibung

Die Erfindung betrifft ein Wert- oder Sicherheitsdokument mit einem Trägerkörper, der ein eine Antenne umfassendes RFID-Modul aufweist, welches zwischen einem inaktiven Grundzustand und einem aktivierten Zustand schaltbar ist, wobei das RFID-Modul eingerichtet ist, in dem Grundzustand eine Datenübertragung mit einem innerhalb eines Empfangsbereichs der Antenne befindlichen Lesegeräts zu verhindern und in dem aktivierten Zustand eine Datenübertragung mit dem innerhalb des Empfangsbereichs der Antenne befindlichen Lesegeräts zu ermöglichen, und der Trägerkörper ein Anzeigenmittel umfasst, welches den aktuellen Zustand, in dem sich das RFID-Modul befindet, anzeigt. Die Erfindung betrifft darüber hinaus ein Verfahren zum Betreiben eines Wert- oder Sicherheitsdokuments.

Ausweis-, Wert- oder Sicherheitsdokumente dienen dazu, die Identität einer Person oder Sache oder einen Anspruch, beispielsweise auf Zahlung eines Geldbetrages oder auf Herausgabe eines Produktes oder Erbringung einer Dienstleistung, zu verifizieren. Dabei muss sichergestellt werden, dass das Wert- oder Sicherheitsdokument nur dann ausgelesen, die persönlichen Daten also nur dann ausgelesen und verwendet werden können, wenn der Nutzer dieses wünscht und so ein ungewolltes Fremdauslesen verhindert werden kann.

Die US 2019/0244070 A1 beschreibt einen schaltbaren RFID-Transponder für ein Wert- oder Sicherheitsdokument, wie beispielsweise einer Bankkarte, wobei der Transponder zwischen einem aktivierten Zustand und einem deaktivierten Zustand geschaltet werden kann. Der aktuelle Zustand, in dem sich der RFID-Transponder befindet kann mittels eines Anzeigenmittels beispielsweise mittels einer Farbänderung visualisiert werden. Die Schaltung erfolgt dabei, indem das RFID-Modul relativ zu einer Verstärkungsantenne bewegt wird, sodass das RFID-Modul aktiviert ist, wenn es sich im Empfangsbereich der Verstärkungsantenne befindet, und es deaktiviert ist, wenn es das RFID-Modul sich außerhalb des Empfangsbereichs der Verstärkungsantenne befindet.

In der US 2017 / 0 213 120 A1 wird eine Multikarte beschrieben, die mehrere einzelne Karten in sich vereint. Diese Karte umfasst ein Display sowie eine Eingabeeinheit, welche vorliegend durch Pfeiltasten betätigbar ist. Mit diesen Pfeiltasten kann der Kartentyp gewechselt werden; beispielsweise von einer Identitätskarte hin zu einer Kreditkarte.

In der US 2017 / 0 098 106 A1 wird ein schaltbares RFID-Tag beschrieben, bei welchem das RFID-Modul relativ bezüglich zweier Antennenabschnitte verstellbar ist. Wird das RFID-Modul verschoben, um an den Antennenabschnitten angeschlossen zu sein, so wird simultan an einem Display das Wort "ON", eine grüne Farbe oder eine andere Indikation angezeigt, dass das RFID-Tag aktiviert ist. Im umgekehrten Fall, also wenn das RFID-Modul von den Antennenteilen getrennt wird, wird an einem Display das Wort "OFF", eine rote Farbe oder eine andere Indikation dafür angezeigt, dass das RFID-Tag nicht aktiv ist. Dies setzt voraus, dass das Case oder der Kartenkörper selbst ein entsprechendes Display besitzt.

Nachteilig ist hierbei, dass durch eine mechanische Schaltung eine unbewusste Aktivierung oder Deaktivierung erfolgen kann, beispielsweise durch Erschütterungen oder dass das Modul selber durch zu grobes Verstellen beschädigt werden kann.

Daher ist es Aufgabe der vorliegenden Erfindung, ein Wert- oder Sicherheitsdokument und ein Verfahren zum Betreiben eines derartigen Wert- oder Sicherheitsdokuments bereitzustellen, welches eine sichere Schaltung des RFID Moduls zwischen den Grundzustand und dem aktivierten Zustand ermöglicht.

Diese Aufgabe wird gelöst durch ein Wert- oder Sicherheitsdokument mit den Merkmalen des Anspruchs 1 und durch ein Verfahren mit den Merkmalen des Anspruchs 9. Vorteilhafte Ausgestaltungen mit zweckmäßigen Weiterbildungen der Erfindung sind in den abhängigen Ansprüchen angegeben.

Das erfindungsgemäße Wert- oder Sicherheitsdokument der eingangs genannten Art zeichnet sich in einer ersten Gestaltung insbesondere dadurch aus, dass ein übergeordneter Schaltkreis und eine Sensoreinheit vorhanden sind, dass der übergeordnete Schaltkreis bei Detektion eines Ereignisses mittels der Sensoreinheit, welches mit einem in einem Speicher hinterlegten Ereignis übereinstimmt, eine Umschaltung des RFID-Moduls zwischen dem Grundzustand und den aktivierten Zustand veranlasst. Die Sensoreinheit ist dabei elektronisch- oder zumindest kommunikationsverbunden mit dem übergeordneten Schaltkreis. Durch die Kombination aus einem übergeordneten Schaltkreis und der Sensoreinheit ist eine Schaltung des RFID-Moduls vom aktivierten Zustand in den Grundzustand und umgekehrt sicher möglich, da die Schaltung durch ein mittels der Sensoreinheit vordefiniertes Ereignis veranlasst wird und die Umschaltung nicht mechanisch sondern elektronisch erfolgt. Gleichzeitig wird durch das Anzeigenmittel dem Nutzer der Zustand des RFID-Moduls, also der aktivierte Zustand oder der Grundzustand, angezeigt, sodass dem Nutzer visualisiert wird, ob sein Wert- oder Sicherheitsdokument auslesbar oder nicht auslesbar ist. Dies erhöht die Sicherheit und auch das Vertrauen des Nutzers in die Sicherheit derartiger Wert- oder Sicherheitsdokumente. Die Sensoreinheit kann einen Sensor oder auch eine Mehrzahl von Sensoren, insbesondere eine Mehrzahl von Sensoren, die unterschiedliche Ereignisse detektieren, aufweisen. Das RFID-Modul kann insbesondere als NFC-Modul gebildet sein.

Insbesondere ist es in diesem Zusammenhang bekannt, dass das Anzeigenmittel als eine electronic-ink-Anzeige, also ein elektronisches Papier (engl. e-ink) oder als eine LCD-Anzeige, insbesondere als eine bistabile LCD-Anzeige, die den Anzeigenzustand beibehält, auch wenn die Energieversorgung vorübergehend unterbrochen ist, gebildet ist. Erfindungsgemäß ist vorgesehen, dass das Anzeigenmittel als ein Sichtfenster gebildet ist; ein elektrochromes Fenster oder ein smartes Glas sind ebenfalls bekannt.

Der übergeordnete Schaltkreis und/oder die Sensoreinheit können dabei an die Energieversorgung des RFID-Moduls angeschlossen sein. Um ein ungewolltes Auslesen des Wert- oder Sicherheitsdokuments verhindern zu können, ist es bevorzugt, wenn der übergeordnete Schaltkreis und auch die Sensoreinheit eine vom RFID-Modul unabhängige Energieversorgung aufweist.

Eine besonders einfach umzusetzende Möglichkeit ist dabei, die Energieversorgung des übergeordneten Schaltkreises mittels einer in den Trägerkörper integrierten Batterie, oder mittels einer Solarzelle oder mittels Thermoelektrik oder mittels Piezoelektrik zu bilden. In einer besonders bevorzugten Ausführungsform ist die Energieversorgung als eine Kombination von Einzelenergieversorgungen gebildet, wobei es insbesondere bevorzugt ist, wenn die Einzelenergieversorgungen ausgewählt sind aus der Gruppe, Batterie, Thermoelektrik, Solarzelle oder Piezoelektrik. In diesem Zusammenhang ist es zudem bevorzugt, wenn die Batterie mittels der Solarzelle, der Thermoelektrik oder Piezoelektrik aufladbar ist, dass also eine Ladeschaltung vorhanden ist, mittels der eine erste Energieversorgung durch eine zweite Energieversorgung aufladbar ist.

Die Sensoreinheit ist vorzugsweise als ein Gyrosensor gebildet, wobei der übergeordnete Schaltkreis eingerichtet ist bei Detektion einer Rotationsbewegung eine Schaltung des RFID-Moduls in den aktiven Zustand mittels des Gyrosensors zu veranlassen. Beispielsweise kann eine Bewegung im Uhrzeigersinn oder entgegen dem Uhrzeigersinn detektiert werden.

Alternativ oder zusätzlich ist es auch möglich, dass die Sensoreinheit als ein Beschleunigungssensor, insbesondere als ein 3D-Beschleunigungssensor, gebildet ist, und dass der übergeordnete Schaltkreis eingerichtet ist bei Detektion eines Impulses oberhalb eines vorgegebenen Schwellwerts eine Umschaltung des RFID-Moduls in den aktivierten Zustand mittels des Beschleunigungssensors zu veranlassen. Beispielsweise kann hier ein Schlag einer Längskante oder Querkante oder Ecke des Trägerkörpers auf einen Tisch oder eine harte Oberfläche als das die Umschaltung auslösende Ereignis definiert sein.

Weiterhin ist es alternativ oder zusätzlich auch bevorzugt, wenn die Sensoreinheit ausgewählt ist aus der Gruppe, umfassend einen Fingerabdrucksensor zur Erfassung eines Daktylogramms, ein Iris-Scanner oder eine numerische oder alphanumerische Tastatur. Die Umschaltung erfolgt folglich bei einem Fingerabdrucksensor, indem das durch den Fingerabdrucksensor erfasste Daktylogramm mit dem in einem Speicher hinterlegten Daktylogramm übereinstimmt. Analog erfolgt eine Umschaltung des RFID-Moduls zwischen dem Grundzustand und dem angeregten Zustand, indem eine durch den Irisscanner erfasst Iris mit einer in einem Speicher hinterlegten Iris übereinstimmt, oder die numerische oder alphanumerische erfasste Kombination mit der hinterlegten numerischen oder alphanumerischen Kombination übereinstimmt.

Das erfindungsgemäße Verfahren zum Betreiben eines Wert- oder Sicherheitsdokuments umfasst insbesondere die folgenden Schritte:
a. Betreiben des RFID-Moduls in einem Grundzustand, bei dem eine Datenübertragung mit einem innerhalb des Empfangsbereichs des RFID-Moduls befindlichen Lesegeräts verhindert wird und Anzeigen des Grundzustands durch das Anzeigenmittel, und
b. Durchführen einer Aktivierungsaktion und dadurch Schalten des RFID-Moduls in einen aktivierten Zustand, bei dem eine Datenübertragung mit einem innerhalb des Empfangsbereichs des RFID-Moduls befindlichen Lesegeräts durchführbar ist und Anzeigen des aktivierten Zustands mittels des Anzeigenmittels.

Die Aktivierungsaktion wird dabei bevorzugt mittels der Sensoreinheit detektiert und mittels eines Steuergeräts ausgewertet, wobei eine in einem Speicher hinterlegte Aktivierungsaktion mit der durch die Sensoreinheit erfassten Aktivierungsaktion verglichen wird. Die Aktivierungsaktion kann dabei vorzugsweise eine Rotationsbewegung sein, die mittels eines Gyrosensors detektierbar wäre oder ein Impuls, wenn die Sensoreinheit durch einen Beschleunigungssensor gebildet ist. Das Aktivierungsereignis kann auch als eine vorgegebene oder vorgebbare Abfolge, insbesondere als eine vorgegebene Reihenfolge von Ereignissen oder Aktionen gebildet sein. Weiterhin ist es auch bevorzugt, wenn die Aktivierungsereignisse in einem zeitlich vorgegebenen Muster ablaufen. In diesem Zusammenhang könnte, wenn die Sensoreinheit einen 3D-Beschleungigungssensor umfasst, unter Ausnutzung der Gravitation, eine Sequenz von Posen des Wert- oder Sicherheitsdokuments, insbesondere in einem vorgegebenen zeitlichen Muster als Aktivierungsereignis dienen. Eine Pose ist dabei die relative Ausrichtung des Wert- oder Sicherheitsdokuments bezüglich der Gravitationskraft. Beispielsweise wird mittels des Beschleunigungssensors somit erfasst, ob und wie eine Seite des Wert- oder Sicherheitsdokuments, also eine Vorderseite, oder eine Rückseite, oder eine Seitenfläche, bezüglich der Gravitationskraft ausgerichtet ist. Eine vorgegebene Abfolge verschiedener Ausrichtungen des Wert- oder Sicherheitsdokuments bezüglich der Gravitation dienen dann als Aktivierungs- und/oder Deaktivierungsereignis. Das Aktivierungsereignis kann auch mittels eines Fingerabdrucksensors erfasst werden, das heißt bei Übereinstimmung des erfassten Daktylogramms mit dem hinterlegten Daktylogramm wird die Schaltung des RFID-Moduls vom Grundzustand in den aktivierten Zustand veranlasst oder im Falle eines Iris-Scanners bei Übereinstimmung der erfassten Iris mit einer hinterlegten Iris. Alternativ oder zusätzlich kann auch eine in einen numerischen oder alphanumerischen Tastatur eingegebene numerischen oder alphanumerischen Abfolge, die mit einer hinterlegten numerischen oder alphanumerische Abfolge übereinstimmt, die Umschaltung des RFID-Moduls zwischen dem Grundzustand und dem aktivierten Zustand veranlasst werden. Stimmen die erfasste oder erfassten Aktivierungsaktionen dagegen nicht mit der hinterlegten Aktivierungsaktion oder den hinterlegten Aktivierungsaktionen überein, so wird eine Schaltung des RFID-Moduls durch vom Grundzustand in den aktivierten Zustand und damit ein Auslesen der Daten verhindert. Sind mehrere Sensoreinheiten vorhanden, so kann eine Abfolge von Aktivierungsaktionen, insbesondere eine Abfolge von Aktivierungsaktionen in einer vorgegebenen Reihenfolge, den übergeordneten Schaltkreis und damit das RFID-Modul veranlassen, zwischen dem Grundzustand und dem aktivierten Zustand umgeschaltet zu werden.

Weiterhin ist es bevorzugt, wenn das Verfahren den zusätzlichen dem Schritt b. nachgelagerten Schritt aufweist:
c. Durchführen einer Deaktivierungsaktion zum Schalten des RFID-Moduls in den Grundzustand und Anzeigen des Grundzustands durch das Anzeigenmittel.

Die Deaktivierungsaktion kann dabei entweder ein Zeitablauf sein, das heißt nach einer vorgegebenen Zeit wird das RFID-Modul automatisch vom aktivierten Zustand in den Grundzustand geschaltet oder die Detektion eines weiteren Ereignisses mittels der Sensoreinheit, die mit einem hinterlegten Ereignis übereinstimmt. Dabei können das Aktivierungsereignis und das Deaktivierungsereignis miteinander übereinstimmen oder unterschiedlichen sein. Beispielsweise kann ein weiteres Daktylogramm oder eine Rotationsbewegung oder ein Impuls mittels der Sensoreinheit detektiert werden und mit dem hinterlegten Ereignis verglichen werden.

Die Erfindung sieht vor, dass das Schalten zwischen dem inaktiven Grundzustand und dem aktivierten Zustand des RFID-Moduls mit einem Element erfolgt, durch welches zugleich auch das Anzeigenmittel veranlasst wird, den Zustand des RFID-Moduls anzuzeigen. Damit kommt dem Element eine Doppelfunktion zu, was die Anzahl an zu verwendenden Teilen bei der Herstellung des Wert- oder Sicherheitsdokuments reduziert. Unter "veranlassen" sind Zustände zu verstehen, bei denen das Element selbst angezeigt wird, oder bei denen das Element sichtbar ist.

Das Wert- oder Sicherheitsdokument besitzt einen mechanisch vereinfachten Aufbau, weil das Anzeigenmittel als ein Sichtfenster gebildet ist, in welchem sich das Element befindet und sichtbar ist, wenn sich das RFID-Modul im aktivierten Zustand befindet, und in welchem sich das Element nicht befindet, wenn sich das RFID-Modul im inaktiven Grundzustand befindet. Ein Sichtfenster kommt beispielsweise durch einen transparenten mehrschichtigen Folienstapel zustande. Es ist die vorteilhafte Möglichkeit vorhanden, dass der Trägerkörper eine Ausnehmung oder eine Durchgangsöffnung besitzt, die beidseits durch eine transparente Decklage verschlossen ist. Jedenfalls ist das Sichtfenster so gebildet, dass es in sich das Element zur Anzeige des Zustands des RFID-Moduls aufnehmen kann.

In einer vorteilhaften Gestaltung ist das Element elektrisch leitfähig, wobei das RFID-Modul in einen Schaltkreis eingebunden ist, der ein Kontaktpaar aufweist, dessen Kontakte im aktiven Zustand mittels des Elements elektrisch leitend verbunden sind, und dessen Kontakte im inaktiven Grundzustand elektrisch voneinander getrennt sind. Damit kann also das Kontaktpaar durch das elektrisch leitfähige Element betriebssicher elektrisch leitend geschaltet werden.

Das Wert- oder Sicherheitsdokument kann auch mit einem Kontaktpaar versehen sein, das eine Kavität zwischen seinen beiden Kontakten bildet, in welcher ein als Kugel geformtes Element aufgenommen ist, wenn sich das RFID-Modul im aktivierten Zustand befindet, und in welchem sich das Element nicht befindet, wenn sich das RFID-Modul im inaktiven Grundzustand befindet. Durch die Nutzung der Kavität lässt sich ein betriebssicherer Schaltzustand realisieren, da das Element im aktivierten Zustand durch die beiden Kontakte einer vorgegebenen Haltekraft unterliegt.

Der Schaltzustand lässt sich zusätzlich dadurch sichern, dass das Kontaktpaar mit kalottenförmigen Kontakten gebildet ist.

Eine vorteilhafte Ausgestaltungen des Wert- oder Sicherheitsdokuments sieht vor, dass das RFID-Modul in einen Schaltkreis mit einer Spule eingebunden ist, welche mit einer Kavität gebildet ist, um das Element als Spulenkern aufzunehmen, wobei sich das Element im aktivierten Zustand in der Kavität der Spule befindet, und wobei sich das Element im inaktiven Grundzustand nicht in der Kavität der Spule befindet. Somit kann die Induktivität der Spule für eine sichere Schaltung des RFID-Moduls zwischen seinen beiden Zuständen genutzt werden.

Zur Realisierung eines definierten Schaltzustandes des RFID-Moduls, ist die Möglichkeit vorhanden, dass das Element aus Ferrit oder ferrithaltig gebildet ist.

Anstatt eines übergeordneten Schaltkreises und einer Sensoreinheit kann also ein Schaltkreis des RFID-Moduls ein den Schaltkreis unterbrechendes Kontaktpaar aufweisen, das mittels eines Kanals mit dem als Sichtfenster gebildeten Anzeigenmittel verbunden ist, wobei ein Element, insbesondere ein elektrisch leitendes Element vorhanden ist, welches zwischen dem Sichtfenster und dem Kontaktpaar verstellbar ist, derart, dass der Schaltkreis geschlossen und das RFID-Modul im aktivierten Zustand ist, wenn das Element die Kontaktpaare elektrisch verbindet, und dass der Schaltkreis offen und das RFID-Modul im Grundzustand ist, wenn das Element im Sichtfenster angeordnet ist, das Kontaktpaar elektrisch voneinander getrennt ist. Dies ermöglicht eine einfach umzusetzende mechanische Schaltung des Wert- oder Sicherheitsdokuments zwischen dem Grundzustand und dem aktivierten Zustand, wobei der Zustand, in dem sich das RFID-Modul befindet, auf einfache Art und Weise anhand des Vorhandenseins des Elements, insbesondere des elektrisch leitenden Elements im Sichtfenster oder der Abwesenheit des Elements im Sichtfenster visualisierbar ist. Das Kontaktpaar ist dabei besonders bevorzugt als eine Kavität, also als ein Hohlraum, ein Tunnel oder eine Bohrung gebildet, wobei das Element zwischen der Kavität und dem Sichtfenster verstellbar ist.

Die Kavität kann dabei bevorzugt als ein Tunnel oder als eine Spule gebildet sein. Die Verstellung des Elements und damit die Umschaltung des RFID-Moduls zwischen dem Grundzustand und dem angeregten Zustand erfolgt vorzugsweise durch Verformung des Trägerkörpers oder durch einen Impuls also eine Krafteinwirkung auf den Trägerkörper. Weiterhin ist es bevorzugt, wenn das Element als eine Kugel oder als ein Zylinder gebildet ist, diese lassen sich besonders einfach in der Kavität und innerhalb des Kanals zwischen der Kavität und dem Sichtfenster verstellen.

Vorzugsweise sieht das Verfahren vor, dass das Anzeigenmittel als ein Sichtfenster gebildet ist, wobei sich das Element im inaktiven Grundzustand in dem Sichtfenster befindet und sichtbar ist, und dass das Element beim Durchführen der Aktivierungsaktion aus dem Sichtfenster herausverstellt wird, um das RFID-Modul in den aktivierten Zustand zu schalten. Somit wird also das Element als Mittel genutzt, um den Zustand des RFID-Moduls anzuzeigen.

Dabei ist insbesondere vorgesehen, dass das Element elektrisch leitfähig ist, dass das RFID-Modul in einen Schaltkreis eingebunden ist, der ein Kontaktpaar mit zwei Kontakten aufweist, und dass das Element beim Durchführen der Aktivierungsaktion die beiden Kontakte des Schaltkreises elektrisch verbindet. Das elektrische Verbinden der beiden Kontakte schafft betriebssichere Bedingungen für den aktivierten Zustand.

Es ist auch möglich, dass das RFID-Modul in einen Schaltkreis mit einer Spule eingebunden ist, welche mit einer Kavität gebildet ist, und dass das Element beim Durchführen der Aktivierungsaktion als Spulenkern in der Kavität aufgenommen wird, um das RFID-Modul in den aktivierten Zustand zu schalten. Auch hierdurch werden betriebssichere, weil stabile Bedingungen für den aktivierten Zustand geschaffen.

Um das mechanische Schalten des Elements zu vereinfachen, ist beispielsweise vorgesehen, dass der Trägerkörper mit einem Kanal gebildet ist, und dass das Element beim Durchführen der Aktivierungsaktion ausgehend von dem Sichtfenster innerhalb des Kanals verschoben wird.

Weitere Merkmale, Eigenschaften und Vorteile der vorliegenden Erfindung werden im Folgenden anhand von Ausführungsvarianten unter Bezugnahme auf die beigefügten Figuren näher beschrieben. Alle bisher und im Folgenden beschriebenen Merkmale sind dabei sowohl einzeln als auch in einer beliebigen Kombination miteinander vorteilhaft. Die im Folgenden beschriebenen Ausführungsvarianten stellen lediglich Beispiele dar, welche den Gegenstand der Erfindung jedoch nicht beschränken. Dabei zeigen:
- Figur 1: eine schematische Darstellung eines ersten Wert- oder Sicherheitsdokuments mit einem übergeordneten Schaltkreis,
- Figur 2: eine schematische Darstellung eines zweiten Wert- oder Sicherheitsdokuments mit einer Kavität im aktivierten Zustand,
- Figur 3: eine schematische Darstellung des zweiten Wert- oder Sicherheitsdokuments im Grundzustand,
- Figur 4: eine schematische Darstellung eines dritten Wert- oder Sicherheitsdokuments mit einer Spule im aktivierten Zustand,
- Figur 5: eine schematische Darstellung des dritten Wert- oder Sicherheitsdokuments im Grundzustand,
- Figur 6: eine schematische Darstellung eines vierten Wert- oder Sicherheitsdokuments im aktivierten Zustand und
- Figur 7: eine schematische Darstellung des vierten Wert- oder Sicherheitsdokuments im Grundzustand.

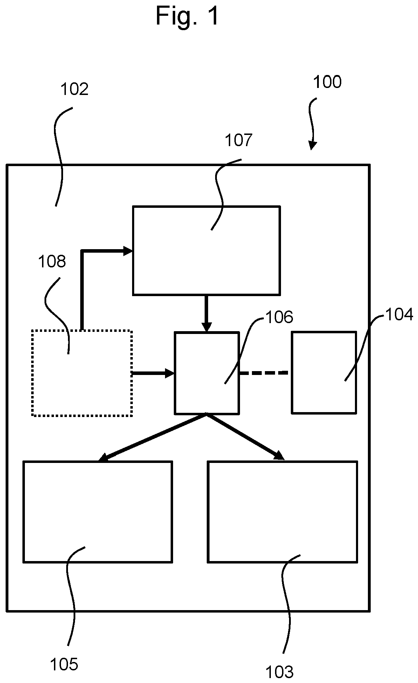

Figur 1 zeigt ein erstes Wert- oder Sicherheitsdokument 100 mit einem Trägerkörper 102, der ein eine Antenne umfassendes RFID-Modul 103 aufweist. Das RFID-Modul 103 ist zwischen einem inaktiven Grundzustand und einem aktivierten Zustand schaltbar, wobei das RFID-Modul 103 eingerichtet ist, in dem Grundzustand eine Datenübertragung mit einem innerhalb eines Empfangsbereichs der Antenne befindlichen, nicht näher dargestellten Lesegeräts zu verhindern und in dem aktivierten Zustand eine Datenübertragung mit dem innerhalb des Empfangsbereichs der Antenne befindlichen Lesegeräts zu ermöglichen. Der Trägerkörper 102 umfasst ein Anzeigenmittel 105, welches den aktuellen Zustand, in dem sich das RFID-Modul 103 befindet, anzeigt. Die Schaltung des RFID-Moduls 103 zwischen dem Grundzustand und dem aktivierten Zustand erfolgt mittels eines übergeordneten Schaltkreises 106 und einer mit dem übergeordneten Schaltkreis elektronisch- und/oder kommunikations-verbundenen Sensoreinheit 107. Detektiert die Sensoreinheit 107 ein Ereignis, so leitet sie dieses an ein Steuergerät 104 des übergeordneten Schaltkreises 106 weiter, welcher das detektierte Ereignis mit einem in einem Speicher hinterlegten Ereignis vergleicht. Bei Übereinstimmung des detektierten Ereignisses mit dem hinterlegten Ereignis veranlasst der übergeordnete Schaltkreis 106 mittels des Steuergeräts 104 das RFID-Modul 103 zwischen dem Grundzustand und dem aktivierten Zustand zu schalten. Das Anzeigenmittel 105 kann dabei als eine electronic-Ink-Anzeige (e-Ink) oder als eine LCD-Anzeige oder als ein Sichtfenster, oder als ein elektrochromes Fenster oder als ein smartes Glas gebildet sein. Der Grundzustand und der aktivierte Zustand kann durch das Anzeigenmittel 105 beispielsweise durch eine Farbänderung oder durch Anzeige von Worten oder Zahlen, beispielsweise "Aktiv" oder "Deaktiv" oder "An" oder "Aus" dem Nutzer visualisiert werden.

Der übergeordnete Schaltkreis 106 und die Sensoreinheit 107 weisen eine vom RFID-Modul 103 unabhängige Energieversorgung 108 auf. Dies verhindert oder reduziert zumindest die Manipulationsmöglichkeiten des RFID-Moduls 103, da der übergeordnete Schaltkreis 106 energietechnisch unabhängig vom RFID-Modul 103 betreibbar ist. Die Energieversorgung 108 des übergeordneten Schaltkreises 106 und der Sensoreinheit 107 kann dabei entweder durch eine in den Trägerkörper 102 integrierte Batterie, oder mittels einer Solarzelle oder mittels Thermoelektrik oder mittels Piezoelektrik sichergestellt werden. Die Energieversorgung 108 kann insbesondere als eine Kombination von Einzelenergieversorgungen gebildet sein, wobei die Einzelenergieversorgungen ausgewählt sind aus der Gruppe, Batterie, Thermoelektrik, Solarzelle oder Piezoelektrik. In diesem Zusammenhang ist es zudem bevorzugt, wenn die Batterie mittels der Solarzelle, der Thermoelektrik oder Piezoelektrik aufladbar ist, dass also eine Ladeschaltung vorhanden ist, mittels der eine erste Energieversorgung 108, insbesondere eine Batterie, durch eine zweite Energieversorgung 108, insbesondere durch eine Solarzelle, oder ein Thermoelement oder eine Piezoelektrik aufladbar ist.

Die Sensoreinheit 107 kann als Gyrosensor gebildet sein, sodass der übergeordnete Schaltkreis 106 eingerichtet ist eine Schaltung des RFID-Moduls 103 in den aktiven Zustand bei Detektion einer Rotationsbewegung mittels des Gyrosensors zu veranlassen. Alternativ oder zusätzlich kann die Sensoreinheit 107 oder ein weiterer Sensor der Sensoreinheit 107 als ein Beschleunigungssensor gebildet sein, sodass der übergeordnete Schaltkreis 106 eingerichtet ist, bei Detektion eines Impulses oberhalb eines vorgegebenen Schwellwerts, eine Umschaltung des RFID-Moduls 103 durch das Steuergerät 104 mittels des Beschleunigungssensors zu veranlassen. Alternativ oder zusätzlich kann die Sensoreinheit 107 oder auch ein weiterer Sensor der Sensoreinheit 107 als ein Fingerabdrucksensor zum Erfassen eines Daktylogramms oder als ein Iris-Scanner zur Erfassung einer Iris oder als eine numerische oder alphanumerische Tastatur gebildet sein.

Das Verfahren zum Betreiben eines derartigen Wert- oder Sicherheitsdokuments 100 umfasst dabei insbesondere die folgenden Schritte:
Zunächst wird das RFID-Modul 103 in einem Grundzustand betrieben, bei dem eine Datenübertragung mit einem innerhalb des Empfangsbereichs des RFID-Moduls 103 befindlichen Lesegeräts verhindert wird. Der Grundzustand wird mittels des Anzeigenmittels 105 angezeigt. Mittels Durchführung einer Aktivierungsaktion wird das RFID-Modul 103 in einen aktivierten Zustand geschaltet, bei dem eine Datenübertragung mit einem innerhalb des Empfangsbereichs des RFID-Moduls 103 befindlichen Lesegeräts durchführbar ist. Der aktivierte Zustand wird dem Nutzer mittels des Anzeigenmittels 105 angezeigt. Das Durchführen einer Aktivierungsaktion, also beispielsweise die Durchführung einer Rotationsbewegung wenn die Sensoreinheit ein Gyrosensor ist, oder die Detektion eines Impulses oberhalb eines vorgegebenen Schwellwerts, wenn die Sensoreinheit 107 ein Beschleunigungssensor ist, veranlasst den übergeordneten Schaltkreis, bei Übereinstimmung des mittels der Sensoreinheit 107 detektierten Ereignisses mit dem in einem Speicher hinterlegten Ereignis, das RFID-Modul 103 vom Grundzustand in den aktivierten Zustand zu schalten. In analoger Weise, wenn die Sensoreinheit 107 als ein Fingerabdrucksensor gebildet ist, veranlasst der übergeordnete Schaltkreis 106, das RFID-Modul 103 in den aktivierten Zustand zu schalten, wenn das erfasste Daktylogramm mit einem in einem Speicher hinterlegten Daktylogramm übereinstimmt. Ist die Sensoreinheit 107 dagegen als ein Iris-Scanner gebildet so wird die Schaltung des RFID-Moduls 103 vom Grundzustand in den aktivierten Zustand veranlasst, wenn die erfasste Iris mit einer in einem Speicher hinterlegten Iris übereinstimmt. In analoger Weise erfolgt dies auch, wenn die Sensoreinheit 107 als eine numerische oder alphanumerische Tastatur gebildet ist, und wenn die erfasste numerische oder alphanumerische Kombination mit einer in einem Speicher hinterlegten Zahlenkombination übereinstimmt. Das Aktivierungsereignis kann auch eine vorgegebene oder vorgebbare Abfolge, insbesondere Reihenfolge, von Ereignissen oder Aktionen sein. Weiterhin ist es auch bevorzugt, wenn die Aktivierungsereignisse in einem zeitlich vorgegebenen Muster ablaufen. In diesem Zusammenhang könnte, wenn die Sensoreinheit 107 einen 3D-Beschleungigungssensor umfasst, unter Ausnutzung der Gravität, eine Sequenz von Posen des Wert- oder Sicherheitsdokuments 100, insbesondere in einem vorgegebenen zeitlichen Muster, als Aktivierungsereignis dienen. Eine Pose ist dabei die relative Ausrichtung des Wert- oder Sicherheitsdokuments 100 bezüglich der Gravitationskraft. Beispielsweise wird mittels des Beschleunigungssensors somit erfasst, ob und wie eine Seite des Wert- oder Sicherheitsdokuments 100, also eine Vorderseite, oder eine Rückseite, oder eine Seitenfläche, bezüglich der Gravitationskraft ausgebrichtet ist. Eine vorgegebene Abfolge verschiedener Ausrichtungen des Wert- oder Sicherheitsdokuments 100 bezüglich der Gravitation dienen dann als Aktivierungs- und/oder Deaktivierungsereignis.

Im Anschluss kann entweder nach Ablauf einer vorgegebenen Zeit das RFID-Modul 103 vom aktivierten Zustand in den Grundzustand zurückgeschaltet werden und der Grundzustand durch das Anzeigenmittel angezeigt werden, oder es wird eine Deaktivierungsaktion zum Schalten des RFID-Moduls 103 durchgeführt. Die Deaktivierungsaktion kann dabei mit den zuvor beschriebenen Aktivierungsaktionen übereinstimmen oder unterschiedlich sein. Beispielsweise kann die Deaktivierungsaktion die Erfassung eines weiteren Daktylogramms durch den Fingerabdrucksensor sein, oder die Erfassung einer Rotationsbewegung. Alternativ, kann die Aktivierungsaktion beispielsweise eine Rotationsbewegung im Uhrzeigersinn sein und die Deaktivierungsaktion eine Rotationsbewegung entgegen dem Uhrzeigersinn.

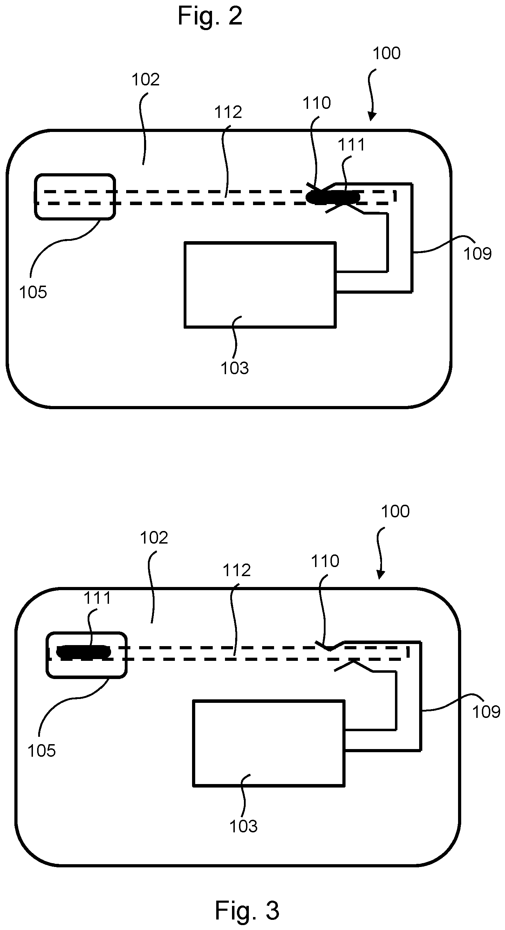

Figur 2 zeigt ein Wert- oder Sicherheitsdokument 100 mit dem Trägerkörper 102, der ein eine Antenne umfassendes RFID-Modul 103 aufweist. Die Schaltung zwischen dem aktivierten Zustand und dem Grundzustand des RFID-Moduls 103 erfolgt dabei mechanisch und nicht wie bei dem ersten Wert- oder Sicherheitsdokument 100 elektrisch. Dazu weist der Schaltkreis 109 des RFID-Moduls 103 ein den Schaltkreis 109 elektrisch unterbrechendes Kontaktpaar auf, welches mittels eines Kanals 112 mit dem als ein Sichtfenster gebildeten Anzeigenmittel 105 verbunden ist. Das Kontaktpaar ist bevorzugt als eine Kavität 110, also als ein Hohlraum, ein Tunnel oder eine Bohrung gebildet, in der ein Element 111, insbesondere ein elektrisch leitendes Element, verstellbar angeordnet ist, um den Schaltkreis 109 zu schließen. Weiterhin ist das Element 111 zwischen dem Sichtfenster 105 und der Kavität 110 verstellbar, derart, dass der Schaltkreis geschlossen und dass RFID-Modul im aktivierten Zustand ist, wenn das Element 111 in der Kavität 110 angeordnet ist, und dass der Schaltkreis offen und damit das RFID-Modul 103 im Grundzustand ist, wenn das Element 111 im Sichtfenster angeordnet ist, wie dies in der Figur 3 dargestellt ist.

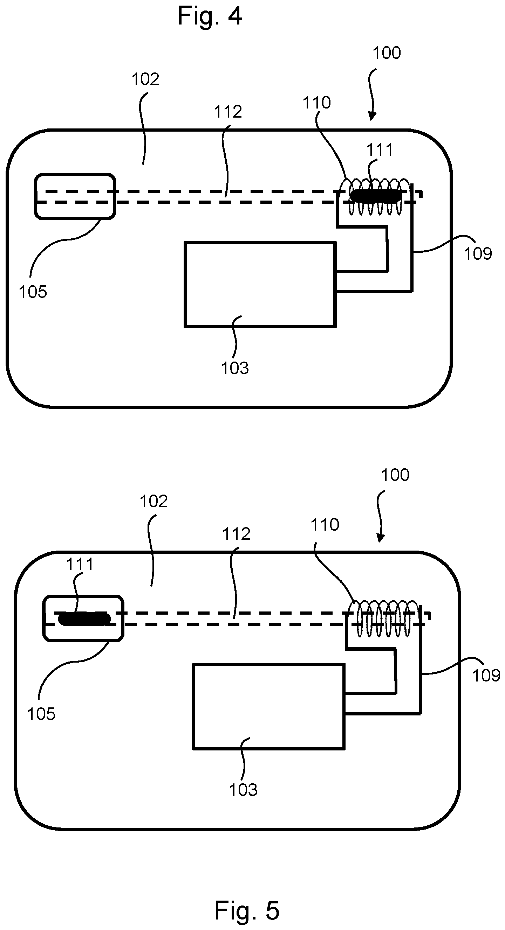

Figur 4 zeigt ein drittes Wert- oder Sicherheitsdokument 100, wobei die Kavität 110 als eine Spule gebildet ist. Das Element 111, welches vorzugsweise als ein elektrisch leitendes oder elektrisch nicht leitendes Element, beispielsweise als ein Ferrit oder ferrithaltig oder aus einem Material mit hoher Permeabilität gebildet ist, befindet sich als Spulenkern im aktivierten Zustand in der Spule, sodass die Induktivität der Spule erhöht wird. Dadurch wird der Arbeitspunkt der Antenne derart angepasst oder verschoben, dass eine Kommunikation zwischen dem Wert- oder Sicherheitsdokument 100 und einem Lesegerät ermöglicht wird. Das RFID-Modul 103 und damit das Wert- oder Sicherheitsdokument 100 sind somit aktiviert.

Figur 5 zeigt das dritte Wert- oder Sicherheitsdokument 100 im Grundzustand, bei dem das Element 111, also der Spulenkern, außerhalb der Spule im Sichtfenster angeordnet ist. Die Induktivität der Spule ist im Vergleich zum aktivierten Zustand reduziert. Dadurch wird der Arbeitspunkt der Antenne derart angepasst oder verschoben, dass eine Kommunikation zwischen dem Wert- oder Sicherheitsdokument 100 und einem Lesegerät verhindert wird. Das RFID-Modul 103 und damit das Wert- oder Sicherheitsdokument 100 sind somit deaktiviert. Das RFID-Modul 103 ist im Grundzustand.

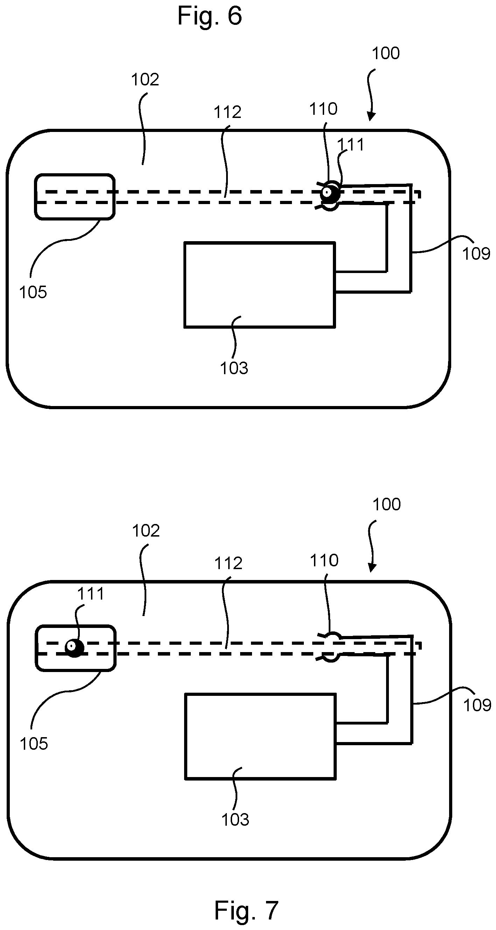

Das Wert- oder Sicherheitsdokument 100, welches in den Figuren 6 und 7 dargestellt ist, zeigt ein RFID-Modul 103, dessen Schaltkreis 109 eine Kavität 110 aufweist, die als Aufnahme gebildet ist. Ist das Element 111, welches als ein elektrisch leitendes Element gebildet ist, in der Aufnahme angeordnet, wie in Figur 6 dargestellt, so kommt es zum Kontaktschluss zwischen dem Kontaktpaar des Schaltkreises mittels des elektrisch leitenden Elements 111 und der Schaltkreis 109 ist geschlossen und das RFID-Modul 103 ist im aktivierten Zustand. Durch Zusammendrücken der Längs- oder Querkanten des Wert- oder Sicherheitsdokuments, also durch Verformung des Trägerkörpers 102 löst sich das als Kugel gebildete elektrisch leitende Element 111 aus der zylindrischen Kavität 110 und wird durch den Kanal 112 zum Sichtfenster und damit zum Anzeigenmittel 105 verstellt. Im Anzeigenmittel 105 ist bevorzugt eine nicht näher dargestellte Fixierkavität vorhanden, die das elektrisch leitende Element 111 im Sichtfenster vorübergehend und damit den Grundzustand des RFID-Moduls 103 fixiert. Durch erneute Verformung des Trägerkörpers 102, also durch ein erneutes Zusammendrücken der Längskanten oder der Querkanten des Trägerkörpers 102, kann wiederum das elektrisch leitende Element 111 in die Kavität 110, verstellt werden, und so das Wert- oder Sicherheitsdokument 100 vom Grundzustand in den aktivierten Zustand verstellt werden.

Das Verfahren zum Betreiben derartiger Wert- oder Sicherheitsdokumente 100 mit mechanischer Schaltung erfolgt dabei analog zu dem Betreiben eines Wert- oder Sicherheitsdokuments mit elektrischer Schaltung. Allerdings wird das Aktivierungs- oder Deaktivierungsereignis nicht mittels eines durch die Sensoreinheit 107 erfasstes Aktivierungs- oder Deaktivierungsereignis veranlasst, sondern durch eine Verformung, einen Impuls oder einen Schlag des Trägerkörpers 102 auf eine harte Oberfläche.

### BEZUGSZEICHENLISTE

- 100: Wert- oder Sicherheitsdokument
- 102: Trägerkörper
- 103: RIFD-Modul
- 104: Steuergerät
- 105: Anzeigenmittel
- 106: übergeordneter Schaltkreis
- 107: Sensoreinheit
- 108: Energieversorgung (übergeordneter Schaltkreis)
- 109: Schaltkreis (RFID Modul)
- 110: Kavität
- 111: Element
- 112: Kanal

## Patentansprüche

1. Wert- oder Sicherheitsdokument (100) mit einem Trägerkörper (102), der ein eine Antenne umfassendes RFID-Modul (103) aufweist, welches zwischen einem inaktiven Grundzustand und einem aktivierten Zustand schaltbar ist, wobei das RFID-Modul (103) eingerichtet ist, in dem Grundzustand eine Datenübertragung mit einem innerhalb eines Empfangsbereichs der Antenne befindlichen Lesegeräts zu verhindern und in dem aktivierten Zustand eine Datenübertragung mit dem innerhalb des Empfangsbereichs der Antenne befindlichen Lesegeräts zu ermöglichen, und der Trägerkörper (102) ein Anzeigenmittel (105) umfasst, welches den aktuellen Zustand, in dem sich das RFID-Modul (103) befindet, anzeigt, **dadurch gekennzeichnet, dass** das Schalten zwischen dem inaktiven Grundzustand und dem aktivierten Zustand des RFID-Moduls (103) mit einem Element (111) erfolgt, durch welches zugleich auch das Anzeigenmittel (105) veranlasst wird, den Zustand des RFID-Moduls (103) anzuzeigen, **dadurch gekennzeichnet, dass** das Anzeigenmittel (105) als ein Sichtfenster gebildet ist, in welchem sich das Element (111) befindet und sichtbar ist, wenn sich das RFID-Modul (103) im aktivierten Zustand befindet, und in welchem sich das Element (111) nicht befindet, wenn sich das RFID-Modul (103) im inaktiven Grundzustand befindet.

2. Wert- oder Sicherheitsdokument (100) nach Anspruch 1, **dadurch gekennzeichnet, dass** das Anzeigenmittel (105) als eine e-Ink- oder als eine LCD-Anzeige gebildet ist, und dass die e-Ink- oder LCD-Anzeige durch eine Betätigung eines Schalters mittels des Elements (111) angesteuert wird.

3. Wert- oder Sicherheitsdokument (100) nach Anspruch 1 oder 2, **dadurch gekennzeichnet, dass** das Element (111) elektrisch leitfähig ist, und dass das RFID-Modul (103) in einen Schaltkreis (109) eingebunden ist, der ein Kontaktpaar aufweist, dessen Kontakte im aktiven Zustand mittels des Elements (111) elektrisch leitend verbunden sind, und dessen Kontakte im inaktiven Grundzustand elektrisch voneinander getrennt sind.

4. Wert- oder Sicherheitsdokument (100) nach Anspruch 3, **dadurch gekennzeichnet, dass** das Kontaktpaar eine Kavität (110) bildet, in welcher das als Kugel geformte Element (111) aufgenommen ist, wenn sich das RFID-Modul (103) im aktivierten Zustand befindet, und in welchem sich das Element (111) nicht befindet, wenn sich das RFID-Modul (103) im inaktiven Grundzustand befindet.

5. Wert- oder Sicherheitsdokument (100) nach Anspruch 4, **dadurch gekennzeichnet, dass** jeder der Kontakte des Kontaktpaars kalottenförmig gestaltet ist.

6. Wert- oder Sicherheitsdokument (100) nach Anspruch 1 oder 2, **dadurch gekennzeichnet, dass** das RFID-Modul (103) in einen Schaltkreis (109) mit einer Spule eingebunden ist, welche mit einer Kavität (110) gebildet ist, um das Element (111) als Spulenkern aufzunehmen, wobei sich das Element (111) im aktivierten Zustand in der Kavität (110) des Spule befindet, und wobei sich das Element (111) im inaktiven Grundzustand nicht in der Kavität (110) der Spule befindet.

7. Wert- oder Sicherheitsdokument (100) nach Anspruch 6, **dadurch gekennzeichnet, dass** das Element (111) aus Ferrit oder ferrithaltig gebildet ist.

8. Wert- oder Sicherheitsdokument (100) nach einem der Ansprüche 3 bis 7, **dadurch gekennzeichnet, dass** in dem Trägerkörper (102) ein Kanal (112) ausgebildet ist, welcher das Anzeigenmittel (105) mit dem Schaltkreis (109) verbindet, um das Element (111) für das Schalten zwischen dem inaktiven Grundzustand und dem aktivierten Zustand zu verstellen.

9. Verfahren zum Betreiben eines Wert- oder Sicherheitsdokuments (100) nach einem der Ansprüche 1 bis 8, umfassend die Schritte:
a. Betreiben des RFID-Moduls (103) in einem Grundzustand, bei dem eine Datenübertragung mit einem innerhalb des Empfangsbereichs des RFID-Moduls (103) befindlichen Lesegeräts verhindert wird und Anzeigen des Grundzustands durch das Anzeigenmittel (105),
b. Durchführen einer Aktivierungsaktion und dadurch Schalten des RFID-Moduls (103) in einen aktivierten Zustand, bei dem eine Datenübertragung mit einem innerhalb des Empfangsbereichs des RFID-Moduls (103) befindlichen Lesegeräts durchführbar ist und Anzeigen des aktivierten Zustands mittels des Anzeigenmittels (105), **dadurch gekennzeichnet, dass** das Anzeigenmittel (105) als ein Sichtfenster gebildet ist, wobei sich das Element (111) im inaktiven Grundzustand in dem Sichtfenster befindet und sichtbar ist, und dass das Element (111) beim Durchführen der Aktivierungsaktion aus dem Sichtfenster herausverstellt wird, um das RFID-Modul (103) in den aktivierten Zustand zu schalten.

10. Verfahren nach Anspruch 9, **dadurch gekennzeichnet, dass** das Element (111) elektrisch leitfähig ist, dass das RFID-Modul (103) in einen Schaltkreis (109) eingebunden ist, der ein Kontaktpaar mit zwei Kontakten aufweist, und dass das Element (111) beim Durchführen der Aktivierungsaktion die beiden Kontakte des Schaltkreises (109) elektrisch verbindet.

11. Verfahren nach Anspruch 9, **dadurch gekennzeichnet, dass** das RFID-Modul (103) in einen Schaltkreis (109) mit einer Spule eingebunden ist, welche mit einer Kavität (110) gebildet ist, und dass das Element (111) beim Durchführen der Aktivierungsaktion als Spulenkern in der Kavität (110) aufgenommen wird, um das RFID-Modul (103) in den aktivierten Zustand zu schalten.

12. Verfahren nach einem der Ansprüche 9 bis 11, **dadurch gekennzeichnet, dass** der Trägerkörper (102) mit einem Kanal (112) gebildet ist, und dass das Element (111) beim Durchführen der Aktivierungsaktion ausgehend von dem Sichtfenster innerhalb des Kanals (112) verschoben wird.

13. Verfahren nach einem der Ansprüche 9 bis 12, **gekennzeichnet durch** den zusätzlichen, dem Schritt b. nachgelagerten Schritt:
c. Durchführen einer Deaktivierungsaktion zum Schalten des RFID-Moduls (103) in den Grundzustand und Anzeigen des Grundzustands **durch** das Anzeigenmittel (105).

## Claims

1. A value or security document (100) having a carrier body (102) which has an RFID module (103) which comprises an antenna and can be switched between an inactive basic state and an activated state, the RFID module (103) being set up to prevent data transmission with a reader located within a reception range of the antenna in the basic state and to enable data transmission with the reader located within the reception range of the antenna in the activated state, and the carrier body (102) comprising an indicator means (105) which indicates the current state in which the RFID module (103) is located, **characterized in that** the switching between the inactive basic state and the activated state of the RFID module (103) is carried out using an element (111), in which the RFID module (103) is located, **characterized in that** the switching between the inactive basic state and the activated state of the RFID module (103) is carried out with an element (111), by means of which the indicator means (105) is also simultaneously caused to display the state of the RFID module (103), **characterized in that** the indicator means (105) is formed as a viewing window in which the element (111) is located and is visible when the RFID module (103) is in the activated state, and in which the element (111) is not located when the RFID module (103) is in the inactive basic state.

2. The value or security document (100) according to claim 1, **characterized in that** the indicator means (105) is formed as an e-ink or as an LCD display, and **in that** the e-ink or LCD display is actuated by actuating a switch by means of the element (111).

3. The value or security document (100) according to claim 1 or 2, **characterized in that** the element (111) is electrically conductive, and **in that** the RFID module (103) is incorporated into a circuit (109) which has a pair of contacts whose contacts are electrically conductively connected by means of the element (111) in the active state, and whose contacts are electrically separated from one another in the inactive basic state.

4. The value or security document (100) according to claim 3, **characterized in that** the contact pair forms a cavity (110) in which the element (111), which is shaped as a sphere, is accommodated when the RFID module (103) is in the activated state, and in which the element (111) is not located when the RFID module (103) is in the inactive basic state.

5. The value or security document (100) according to claim 4, **characterized in that** each of the contacts of the contact pair is dome-shaped.

6. The value or security document (100) according to claim 1 or 2, **characterized in that** the RFID module (103) is incorporated into a circuit (109) with a coil which is formed with a cavity (110) in order to accommodate the element (111) as a coil core, the element (111) being located in the cavity (110) of the coil in the activated state, and the element (111) not being located in the cavity (110) of the coil in the inactive basic state.

7. The value or security document (100) according to claim 6, **characterized in that** the element (111) is formed from ferrite or contains ferrite.

8. The value or security document (100) according to one of claims 3 to 7, **characterized in that** a channel (112) is formed in the carrier body (102), which connects the display means (105) to the switching circuit (109) in order to adjust the element (111) for switching between the inactive basic state and the activated state.

9. A method for operating a value or security document (100) according to any one of claims 1 to 8, comprising the steps of:
a. Operating the RFID module (103) in a default state in which data transmission with a reader located within the receiving range of the RFID module (103) is prevented, and indicating the default state by the indicating means (105),
b. Performing an activation action and thereby switching the RFID module (103) to an activated state in which data transmission with a reader located within the receiving range of the RFID module (103) can be performed and displaying the activated state by means of the indicator means (105), **characterized in in that** the indicator means (105) is formed as a viewing window, the element (111) being located in the viewing window in the inactive basic state and being visible, and **in that** the element (111) is moved out of the viewing window when the activation action is carried out in order to switch the RFID module (103) to the activated state.

10. The method according to claim 9, **characterized in that** the element (111) is electrically conductive, **in that** the RFID module (103) is integrated into a circuit (109) which has a contact pair with two contacts, and **in that** the element (111) electrically connects the two contacts of the circuit (109) when the activation action is carried out.

11. The method according to claim 9, **characterized in that** the RFID module (103) is incorporated in a circuit (109) with a coil which is formed with a cavity (110), and **in that** the element (111) is received as a coil core in the cavity (110) when the activation action is carried out, in order to switch the RFID module (103) to the activated state.

12. The method according to any one of claims 9 to 11, **characterized in that** the carrier body (102) is formed with a channel (112), and that the element (111) is displaced within the channel (112) starting from the viewing window when performing the activation action.

13. The method according to any one of claims 9 to 12, **characterized by** the additional step subsequent to step b:
c. Performing a deactivation action for switching the RFID module (103) to the initial state and displaying the initial state by the indicator means (105).

## Revendications

1. Document de valeur ou de sécurité (100) avec un corps porteur (102) qui présente un module RFID (103) comprenant une antenne, module qui est commutable entre un état de base inactif et un état activé, dans lequel le module RFID (103) est configuré afin d'empêcher, dans l'état de base, une transmission de données avec un appareil de lecture se trouvant à l'intérieur d'une zone de réception de l'antenne et de permettre, dans l'état activé, une transmission de données avec l'appareil de lecture se trouvant à l'intérieur de la zone de réception de l'antenne, et le corps porteur (102) comprend un moyen d'affichage (105) qui affiche l'état actuel dans lequel le module RFID (103) se trouve, **caractérisé en ce que** la commutation est effectuée entre l'état de base inactif et l'état activé du module RFID (103) avec un élément (111) par lequel le moyen d'affichage (105) est aussi amené en même temps à afficher l'état du module RFID (103), **caractérisé en ce que** le moyen d'affichage (105) est formé comme une fenêtre d'observation dans laquelle l'élément (111) se trouve et est visible lorsque le module RFID (103) se trouve dans l'état activé et dans lequel l'élément (111) ne se trouve pas lorsque le module RFID (103) se trouve dans l'état de base inactif.

2. Document de valeur ou de sécurité (100) selon la revendication 1, **caractérisé en ce que** le moyen d'affichage (105) est formé comme un affichage à encre électronique ou LCD, et **en ce que** l'affichage à encre électronique ou LCD est commandé par un actionnement d'un commutateur au moyen de l'élément (111).

3. Document de valeur ou de sécurité (100) selon la revendication 1 ou 2, **caractérisé en ce que** l'élément (111) est électroconducteur, et **en ce que** le module RFID (103) est intégré dans un circuit de commutation (109) qui présente une paire de contacts dont les contacts sont reliés de manière électroconductrice dans l'état actif au moyen de l'élément (111) et dont les contacts sont séparés électriquement l'un de l'autre dans l'état de base inactif.

4. Document de valeur ou de sécurité (100) selon la revendication 3, **caractérisé en ce que** la paire de contacts forme une cavité (110) dans laquelle l'élément (111) formé comme une bille est reçu lorsque le module RFID (103) se trouve dans l'état activé et dans lequel l'élément (111) ne se trouve pas lorsque le module RFID (103) se trouve dans l'état de base inactif.

5. Document de valeur ou de sécurité (100) selon la revendication 4, **caractérisé en ce que** chacun des contacts de la paire de contacts est conçu en forme de calotte.

6. Document de valeur ou de sécurité (100) selon la revendication 1 ou 2, **caractérisé en ce que** le module RFID (103) est intégré dans un circuit de commutation (109) avec une bobine qui est formée avec une cavité (110) afin de recevoir l'élément (111) comme noyau de bobine, dans lequel l'élément (111) se trouve dans la cavité (110) de la bobine dans l'état activé, et dans lequel l'élément (111) ne se trouve pas dans la cavité (110) de la bobine dans l'état de base inactif.

7. Document de valeur ou de sécurité (100) selon la revendication 6, **caractérisé en ce que** l'élément (111) est formé de ferrite ou contient de la ferrite.

8. Document de valeur ou de sécurité (100) selon l'une quelconque des revendications 3 à 7, **caractérisé en ce qu'**un canal (112) est réalisé dans le corps porteur (102), lequel canal relie le moyen d'affichage (105) au circuit de commutation (109) afin de régler l'élément (111) pour la commutation entre l'état de base inactif et l'état activé.

9. Procédé de fonctionnement d'un document de valeur ou de sécurité (100) selon l'une quelconque des revendications 1 à 8, comprenant les étapes suivantes :
a. le fonctionnement du module RFID (103) dans un état de base pour lequel une transmission de données avec un appareil de lecture se trouvant à l'intérieur de la zone de réception du module RFID (103) est empêchée et l'affichage de l'état de base par le moyen d'affichage (105),
b. l'exécution d'une action d'activation et ainsi la commutation du module RFID (103) dans un état activé pour lequel une transmission de données peut être exécutée avec un appareil de lecture se trouvant à l'intérieur de la zone de réception du module RFID (103) et l'affichage de l'état activé au moyen du moyen d'affichage (105), **caractérisé en ce que** le moyen d'affichage (105) est formé comme une fenêtre d'observation dans lequel l'élément (111) se trouve et est visible dans l'état de base inactif dans la fenêtre d'observation, et **en ce que** l'élément (111) est réglé lors de l'exécution de l'action d'activation hors de la fenêtre d'observation afin de commuter le module RFID (103) dans l'état activé.

10. Procédé selon la revendication 9, **caractérisé en ce que** l'élément (111) est électroconducteur, **en ce que** le module RFID (103) est intégré dans un circuit de commutation (109) qui présente une paire de contacts avec deux contacts, et **en ce que** l'élément (111) relie électriquement les deux contacts du circuit de commutation (109) lors de l'exécution de l'action d'activation.

11. Procédé selon la revendication 9, **caractérisé en ce que** le module RFID (103) est intégré dans un circuit de commutation (109) avec une bobine qui est formée avec une cavité (110), et **en ce que** l'élément (111) est reçu comme noyau de bobine dans la cavité (110) lors de l'exécution de l'action d'activation afin de commuter le module RFID (103) dans l'état activé.

12. Procédé selon l'une quelconque des revendications 9 à 11, **caractérisé en ce que** le corps porteur (102) est formé avec un canal (112), et **en ce que** l'élément (111) est déplacé depuis la fenêtre d'observation à l'intérieur du canal (112) lors de l'exécution de l'action d'activation.

13. Procédé selon l'une quelconque des revendications 9 à 12, **caractérisé par** l'étape supplémentaire suivante, en aval de l'étape b. :
c. l'exécution d'une action de désactivation pour la commutation du module RFID (103) dans l'état de base et l'affichage de l'état de base par le moyen d'affichage (105).
